(19) Europäisches Patentamt
European Patent Office
Office européen des brevets

(11) **EP 2 858 285 B1**

(12) **EUROPEAN PATENT SPECIFICATION**

(45) Date of publication and mention
of the grant of the patent:
**10.01.2018   Bulletin 2018/02**

(51) Int Cl.:
***H04L 1/00*** *(2006.01)*     ***H04L 25/03*** *(2006.01)*

(21) Application number: **13187322.6**

(22) Date of filing: **04.10.2013**

(54) **Method for detection of symbols in communication signals**

Verfahren zur Detektierung von Symbolen in Kommunikationssignalen

Procédé de détection de symboles dans des signaux de communication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.04.2015   Bulletin 2015/15**

(73) Proprietor: **Huawei Technologies Co., Ltd.
Longgang District
Shenzhen, Guangdong 518129 (CN)**

(72) Inventor: **Rusek, Fredrik
Lund 22369 (SE)**

(74) Representative: **Thun, Clemens et al
Mitscherlich PartmbB
Patent- und Rechtsanwälte
Sonnenstraße 33
80331 München (DE)**

(56) References cited:
**CN-B- 101 494 462**

• **FREDRIK RUSEK ET AL: "Optimal Channel
Shortening for MIMO and ISI Channels", IEEE
TRANSACTIONS ON WIRELESS
COMMUNICATIONS, IEEE SERVICE CENTER,
PISCATAWAY, NJ, US, vol. 11, no. 2, 1 February
2012 (2012-02-01), pages 810-818, XP011414997,
ISSN: 1536-1276, DOI:
10.1109/TWC.2011.121911.110809**

EP 2 858 285 B1

## Description

## Technical Field

The present method relates to a method for detection of symbols carried in communication signals. Furthermore, the invention also relates to a detection device, a computer program, and a computer program product thereof.

## Background of the Invention

Consider any linear channel of the form $\mathbf{y} = \mathbf{Hx} + \mathbf{n}$ where $\mathbf{H}$ **is** an MxN matrix of channel gains, $\mathbf{x}$ **is** an Nx1 vector of channel inputs, and $\mathbf{n}$ is an Mx1 vector of IID complex Gaussian noise variables with mean 0 and covariance matrix $N_0\mathbf{I}$.

We are interested in the problem of soft-input, soft-output detection of the vector $\mathbf{x}$. This can be readily done through the Bahl-Cook-Jelinke-Raviv (BCJR) algorithm, but the complexity per detected symbol is $O(|\Omega|^K)$ where $\Omega$ is the modulation alphabet and $K$ is the memory of the channel matrix $\mathbf{H}$. The memory is a central theme and we will next define what we mean by this term. Let us do a QL factorization of the channel matrix $\mathbf{H}$, so that we write $\mathbf{H} = \mathbf{QL}$. Then, without loss of generality, we can define the filtered observed vector $\mathbf{r} = \mathbf{Q}^*\mathbf{y} = \mathbf{Lx}+\mathbf{w}$, where $\mathbf{w} \equiv \mathbf{n}$ in distribution. Now we make the following definition of the memory of any channel $\mathbf{H}$.

Definition 1: *If the non-zero elements in* $\mathbf{L}$ *are confined to the first K + 1 diagonals of* $\mathbf{L}$*, then the memory, of* $\mathbf{H}$ *is K, and optimal demodulation has complexity* $O(|\Omega|^K)$*.*

Note that we have made no claims what the channel matrix $\mathbf{H}$ may represent. This innovation assumes an arbitrary $\mathbf{H}$, so that it encompasses, e.g., inter-symbol interference (ISI) channel (e.g., encountered for example in satellite transmission), MIMO (e.g., encountered for example in the LTE downlink), MIMO-ISI (e.g., encountered for example in the LTE uplink), ICI (e.g., encountered for example in the LTE downlink with high Doppler spread), etc. The reader can with benefit keep the ISI example in mind, where the memory $K$ is simply the number of taps minus one of the channel impulse response.

Another central theme within information and communication theory is channel capacity. This is defined as the highest possible rate that the can be carried through the channel with zero error rate. As we have not made any definition of the concept of "time", we will measure channel capacity as the *nats per channel use* that can be reliably transmitted. Achieving capacity requires an optimization over the input distribution of x and this must be matched to the actual communication channel $\mathbf{H}$ (via waterfilling), but in this innovation we assume that no knowledge of $\mathbf{H}$ is available at the transmitter so that such optimization is not possible. Then, the word *capacity* is strictly speaking not correct, but we will stick with the term although it is a slight abuse of notation.

Fact 1: *The capacity of the linear Gaussian vector channel, measured in nats per channel* use is

$$C = \log\det\left(1+\frac{P\,\mathbf{HH}^*}{N_0}\right),$$ *where the inputs* $\mathbf{x}$ *are distributed* as *CN(0, P*$\mathbf{I}$*).*

This capacity can be rewritten as,

Fact 2: *Straightforward manipulations using the chain rule of mutual information yields N*

$$C = \sum_{n=1}^{N} I(x_n;\mathbf{y} \mid x_{n-1},\ldots,x_1),$$ *where I(x;* $\mathbf{y}$*) is the standard mutual information operator.*

The meaning of the memory concept can be included into Fact 2, in order to obtain,

Fact 3: *If the memory of the channel* $\mathbf{H}$ *is K, then* $C = \sum_{n=1}^{N} I(x_n;\mathbf{y} \mid x_{n-1},\ldots,x_{n-K})$*, where* $x_k$ *= {∅},* k≤0.

Finally, the following result is well known,

Fact 4: *With an optimal detector of* $\mathbf{x}$ *given* $\mathbf{y}$*, the capacity of the channel can be reached.*

Let us summarize: to every linear channel **H,** there is an associated memory and a channel capacity. The channel capacity can be reached if the receiver is making use of an optimal detector for **x,** and this detector has a complexity that is exponential in the memory $K$. Note that our measure of receiver complexity assumes discrete inputs while the capacity requires Gaussian distributed inputs. However, the Gaussian input capacity typically represents the discrete input limit very well up to a certain SNR threshold that depends on the cardinality of the inputs. Therefore, the value C is of operational interest even if the system is using discrete inputs rather than Gaussian.

Problems arise if the channel memory $K$ is big so that the complexity $|\Omega|^K$ is beyond the allowed complexity budget. This is a common situation in practice and reduced complexity techniques must therefore be looked into. A few examples are for example the LTE link where the channel memory is often 10 or so, and with 64-QAM inputs this yields a complexity $2^{60}$ per transmitted symbol. This is one of the reasons why OFDM is typically preferred over single carrier in LTE. Another example is the GSM link where the memory of the channel is around 7-10. In GSM, contrary to the LTE case, this memory is indeed handled by a reduced trellis based receiver.

The amount of research that has been devoted to constructing a low-complexity, yet high performance, receiver solution for large memories is massive. One such group of receivers is the channel shortening (CS) receivers. The rationale behind the CS receiver is the following:

1. Filter a received signal **y** with a pre-filter **W, r=Wy**.
2. The aim **of W** is to "compress" the memory of channel **H** to a smaller value.
3. The effective channel is now **T=WH** and this has by assumption a smaller memory than $K,$ denote it by $L.$ We now have **r=Wy=Tx+(Wn)**, where **Wn** is filtered noise.
4. Apply the BCJR algorithm to the signal r where the memory is $L$ by definition.
5. The outcome of steps 1-4 is near-optimal detection, but with complexity $O(|\Omega|^L)$ instead of $O(|\Omega|^K)$.
6. How "near-optimal detection" we really have is determined by the particular choices **of W** and **T,** respectively.

It is reminded that we have a pure matrix-valued notation here. In the case of an ISI channel, the channel matrix **H** becomes a Toeplitz matrix representing a convolution. Then the filter **W** is also a convolution matrix which is well known.

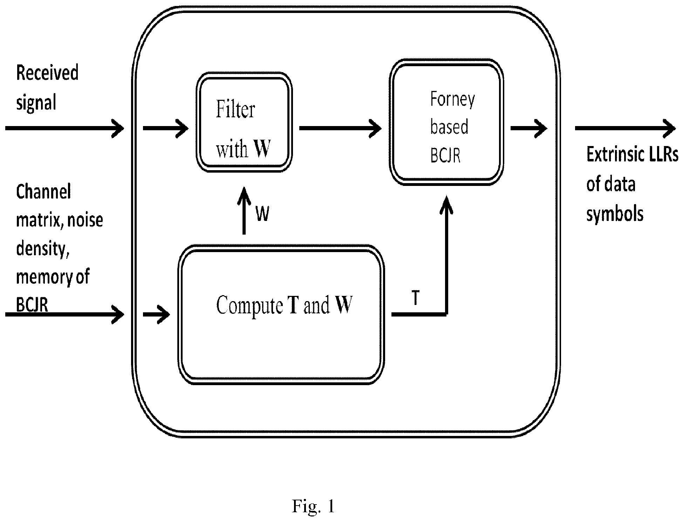

This scheme of CS receivers was invented already in 1973 by Falconer and Magee, and they gave an explicit choice of the two CS parameters **W** and **T**. A block diagram of the CS idea is provided in Fig. 1. The order of operations carried out in CS is illustrated in Fig 1: (i) Based on the channel matrix **H,** the noise density $N_0$ and the memory of the BCJR $L$, the pre-filter **W** and the effective channel **T** is computed; (ii) The received signal **y** is then filtered by the pre-filter **W** which produces the vector **r**. (iii) A BCJR, where the BCJR operations are specified by the matrix **T,** is finally applied on the vector **r**. Note that if we set $L$=0, then the standard zero-forcing equalizer and the MMSE equalizer falls within the CS framework.

## Summary of the Invention

An objective of the present invention is to provide a solution which mitigates or solves the drawbacks and problems of prior art solutions.

Another objective .of the present invention is to provide a method which provides improved decoding performance compared to prior art methods.

According to a first aspect of the invention, the above mentioned and other objectives are achieved by a method for detection of symbols carried in received communication signals, the method comprising the steps of:

receiving at least one communication signal **y** transmitted over a radio channel **H,** wherein said received signal **y** comprises encoded radio channel symbol inputs **x,** and

receiving a priori Log Likelihood Ratios, LLRs, of said channel inputs **x;** and the method further comprises the steps of:

a) computing soft symbol estimates $\mu$ and variance **D** of said channel inputs **x** based on LLRs of said channel inputs **x;**

b) filtering and interference cancelling said received signal **y** by using a first filter and filtered soft symbol estimates $\mu$ so as to obtain a filtered and interference cancelled received signal;

c) estimating the Mean Square Error, MSE, matrix **B** of said filtered and interference cancelled received signal;

d) computing an optimal matrix $G_{opt}$ for a BCJR algorithm based on said MSE estimate B, wherein said optimal matrix $G_{opt}$ specifies the BCJR algorithm;

e) further filtering said filtered and interference cancelled received signal by using a second filter so as to obtain an input signal **r** to the BCJR algorithm, the second filter being derived from said optimal matrix **$G_{opt}$;** and

f) feeding said input signal **r** into the BCJR algorithm so as to obtain extrinsic LLRs of said channel inputs **x,** wherein the LLRs of said channel inputs **x** in step a) is obtained from a decoder, and the method further comprises:

g) feeding said extrinsic LLRs into the decoder so as to obtain updated LLRs of said channel inputs **x**; and

h) repeating steps a)-g) $i$ number of times by using said updated LLRs in step a) to compute soft symbol estimates $\mu$ and variance **D**.

According to another embodiment of the method, the first filter is a modified Wiener filter for said radio channel inputs $x$ having mean $\mu$ and variance **D**.

According to yet another embodiment of the method, the $k$th element of said filtered and interference cancelled received signal has the *form* $r_k = E(x_k | y, \mu_l)$, $l \notin I_k$ where $E$ () is the expectation operator and $I_k$ is a set of indices that depends on $k$ in a pre-determined fashion, and wherein the vector comprising $r_k$, $\forall k$, is denoted by $E(\mathbf{x}|\mathbf{y},\mu)$. According to this embodiment of the method, said set of indices $I_k$ is $I_k = I_k = \{k-L,k-L+1,...k+L-1,k+L\} \cap \{1,2,...,N\}$, where $N$ is the total number of elements in said channel inputs $\mathbf{x}$ a nd $L$ is the memory of the BCJR algorithm. Further according to this embodiment of the method, said optimal matrix $\mathbf{G_{opt}}$ is solely dependent on said MSE estimate **B** and the memory $L$. Further according to this embodiment of the method, the memory $L$ can be arbitrarily chosen. And yet further according to this embodiment of the method, said MSE estimate **B** has the form $\mathbf{B(\mu)} = E[(\mathbf{x} - E(\mathbf{x}|\mathbf{y},\mu))(\mathbf{x}- E(\mathbf{x}|\mathbf{y},\mu))^*]$, where the superscript "*" denotes the Hermitian transpose operator.

According to yet another embodiment of the method, the second filter has the form $(\mathbf{G}_{opt} + \mathbf{I})$, where **I** is the identity matrix. According to this embodiment said input signal **r** to said BCJR algorithm is obtained as: $\mathbf{r} = (\mathbf{G}_{opc} + \mathbf{I})E(\mathbf{x}|\mathbf{y}, \mu)$.

According to yet another embodiment of the method, said radio channel **H** is a linear radio channel.

According to yet another embodiment of the method, the communication signal is transmitted in a cellular wireless communication system, such as 3GPP communication systems.

The present invention also relates to a computer program, having code means, which when run by processing means causes said processing means to execute the method according to the invention. Further, the invention concerns a computer program product comprising a computer readable medium and the computer program, wherein the computer program is included in the computer readable medium, and comprises of one or more from the group: ROM (Read-Only Memory), PROM (Programmable ROM), EPROM (Erasable PROM), Flash memory, EEPROM (Electrically EPROM), hard disk drive or any other suitable computer readable medium.

According to a second aspect of the invention, the above mentioned and other objectives are achieved by a detection device arranged for detection of symbols carried in received communication signals, the receiver comprising a processor arranged to:

receive at least one communication signal $y$ transmitted over a radio channel **H,** wherein said received signal **y** comprises encoded radio channel symbol inputs **x,** and

receive a priori Log Likelihood Ratios, LLRs, of said channel inputs **x**; and the processor being further arranged to:

a) compute soft symbol estimates $\mu$ and variance **D** of said channel inputs **x** based on LLRs of said channel inputs **x**;

b) filter and interference cancel said received signal y by using a first filter and filtered soft symbol estimates $\mu$ so as to obtain a filtered and interference cancelled received signal;

c) estimate the Mean Square Error, MSE, matrix **B** of said filtered and interference cancelled received signal;

d) compute an optimal matrix $\mathbf{G}_{opt}$ for a BCJR algorithm based on said MSE estimate **B,** wherein said optimal matrix $\mathbf{G}_{opt}$ specifies the BCJR algorithm;

e) further filter said filtered and interference cancelled received signal by using a second filter so as to obtain an input signal **r** to the BCJR algorithm, the second filter being derived from said optimal matrix $\mathbf{G}_{opt}$; and

f) feed said input signal **r** into the BCJR algorithm so as to obtain extrinsic LLRs of said channel inputs **x,** wherein the LLRs of said channel inputs **x** in step a) is obtained from a decoder, and the processor is further arranged to:

g) feed said extrinsic LLRs into the decoder so as to obtain updated LLRs of said channel inputs **x;** and

h) repeat steps a)-g) $i$ number of times by using said updated LLRs in step a) to compute soft symbol estimates $\mu$ and variance **D**.

The present invention provides a method and a device for obtaining extrinsic LLRs of channel inputs **x.** The mentioned extrinsic LLRs can be used in many different applications, such as iterative detection of encoded data transmitted over radio channels, E-ICIC of the LTE downlink, satellite communication using the DVB-S standards, to name but a few.

According to preferred embodiments the present solution is used in an iterative detection algorithm with an outer ECC decoder. By using the extrinsic LLRs and iterating the performance is improved.

Further applications and advantages of the invention will be apparent from the following detailed description.

**Brief Description of the Drawings**

The appended drawings are intended to clarify and explain different embodiments of the present invention in which:

- Fig. 1 illustrates a system model of a CS receiver;
- Fig. 2 illustrates the system model of an Ungerboeck based CS;
- Fig. 3 illustrates a system model of a embodiment of the present invention;
- Fig. 4 shows performance results for a detector device according to the present invention;
- Fig. 5 shows an embodiment of a detector device according to the invention;
- Fig. 6 shows an alternative embodiment of a detector device according to the invention; and
- Fig. 7 shows a communication system overview.

**Detailed Description of the Invention**

In the present disclosure bold face uppercase letters denote matrices and bold face lowercase letters denote vectors.

As mentioned above, the history of CS dates more than four decades back. However, Falconer and Magee's original idea is not at all related to the concept of capacity. Instead it optimizes **W** and **T** based on an MMSE cost function. This has only a very vague connection with capacity, and it is unclear what rates are actually achievable with Falconer and Magee's receiver.

From Fact 4 we know that the channel capacity C can be reached by using an optimal full complexity receiver. Since we are using a reduced receiver with much less complexity, it is natural to expect that the capacity C cannot longer be achieved. In all subsequent CS work spurred by Falconer and Magee's work, no attention has been paid to what the penalty of using CS compared to the full complexity receiver really is. No papers studied a capacity related cost function and tried to optimize it.

However, a breakthrough came in 2012 with a paper by F. Rusek and A. Prlja., "Optimal channel shortening for MIMO and ISI channels", IEEE Transactions on Wireless Communications, Feb. 2012.

In this paper, the CS concept was optimized from a capacity perspective and established the CS parameters that will allow for the highest possible rates of any CS detector. There are a number of important results in this paper and we will review parts of these next as they will be important building blocks later.

Fact 5: *If the parameters of the CS receiver is appropriately optimized, then it can allow for a rate per channel use which equals* $C_{CS} = \sum_{n=1}^{N} I(x_n; \mathbf{y} \mid x_{n-1}, \ldots, x_{n-L})$. *Hence, it can implement the chain rule of mutual information up to the reduced memory length L.*

Fact 5 reveals the intuitive result that CS is closely connected to the optimal detector, but it cannot exploit dependencies among symbols further away than the reduced memory length *L*. Another very important result of this paper is that the optimal solution cannot be reached from the normal CS system model outlined in steps 1-6 described above. The system model in the CS literature up to "Optimal channel shortening for MIMO and ISI channels" had been the so called Forney observation model, but in "Optimal channel shortening for MIMO and ISI channels" it was shown that this must be changed in favor of the Ungerboeck observation model. The current innovation is based on the Ungerboeck model and we must therefore describe also the Ungerboeck model.

Steps 1-6 of the CS receiver described above implies that the receiver operates according to a mismatched probability density function (pdf),

$$q(\mathbf{y} \mid \mathbf{x}) \propto \exp\left( -\frac{\|\mathbf{Wy} - \mathbf{Tx}\|^2}{N_0} \right),$$

where oc denotes that all terms not related to x have been omitted. As a reference, the optimal full complexity receiver operates according to,

$$p(\mathbf{y} \mid \mathbf{x}) \propto \exp\left(-\frac{\|\mathbf{y}-\mathbf{Hx}\|^2}{N_0}\right).$$

The mismatched pdf q(**y**|**x**) directly specifies the BCJR operations. Now, the Ungerboeck model is obtained by rewriting p(**y**|**x**) as,

$$p(\mathbf{y} \mid \mathbf{x}) \propto \exp\left(-\frac{\|\mathbf{y}-\mathbf{Hx}\|^2}{N_0}\right) \propto \exp\left(-\frac{2\,\mathrm{Re}\{\mathbf{x}^*\mathbf{H}^*\mathbf{y}\} - \mathbf{x}^*\mathbf{H}^*\mathbf{Hx}}{N_0}\right). \qquad (1)$$

Equation (1) is what we mean by the term "Ungerboeck model". The CS concept in view of the Ungerboeck model is now to modify the last expression of (1) into,

$$q(\mathbf{y} \mid \mathbf{x}) \propto \exp\left(-2\,\mathrm{Re}\{\mathbf{x}^*\mathbf{H}_{opt}^{\;*}\mathbf{y}\} + \mathbf{x}^*\mathbf{G}_{opt}\mathbf{x}\right). \qquad (2)$$

We have now moved from the two CS parameters **W** and **T** into two different CS parameters $\mathbf{H}_{opt}$ and $\mathbf{G}_{opt}$ in the Ungerboeck model. The constraint of memory $L$ that we had before of the matrix T becomes in the Ungerboeck model,

Definition 2: *For an Ungerboeck model with a Hermitian matrix* $\mathbf{G}_{opt}$ *the memory L is defined as the number of diagonals above (or equivalently below) the main diagonal that hold non-zero elements.*

An important result is the following,

Fact 6: *For an Ungerboeck model with memory L, there exist an algorithm (*Colavolpe, G. and Barbieri, A., "On MAP symbol detection for ISI channels using the ungerboeck observation model ", Communications Letters, IEEE (Volume:9, Issue: 8), pp. 720 -722 , Aug. 2005*) that is fully equivalent to the BCJR, that produces the same output and has the same detection complexity, namely* $O(|\Omega|^L)$.

Hence, the Ungerboeck model is equivalent to the Forney model in terms of complexity, but for CS there is a crucial difference, namely,

Fact 7: *For CS, the Ungerboeck model provides more degrees of freedom in selecting CS parameters as the matrix* $G_r$ *need not be positive definite. Somewhat surprising, the outcome is often that the optimal matrix is indeed not positive definite. When this occurs, the Ungerboeck CS offers a performance that is not reachable for Forney CS, which means that the rate in Fact 5 is not reachable for Forney based CS.*

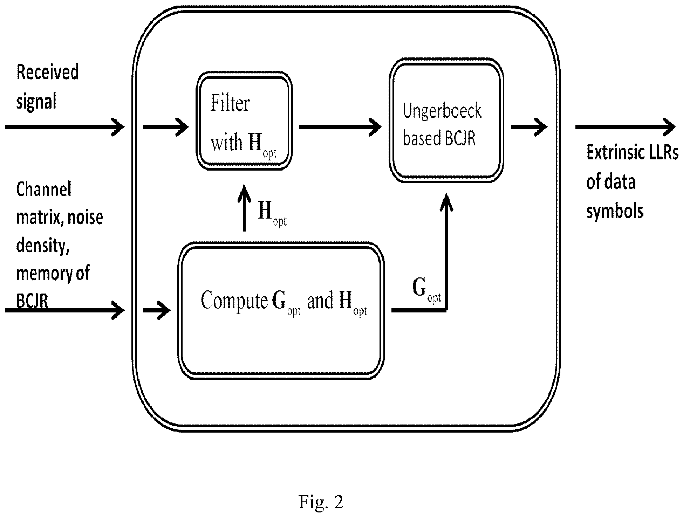

When an Ungerboeck based CS receiver is used, the system model in Fig. 1 is changed into the one in Fig. 2. As can be seen by comparing Fig. 1 and Fig. 2, similar operations are carried out in Ungerboeck based CS as in Forney based CS. The difference lies in the fact that the BCJR algorithm in Ungerboeck based CS requires different type of matrices, i.e., $\mathbf{G}_{opt}$ and $\mathbf{H}_{opt}$, instead of **T** and **W**.
Due to Fact 7, we shall stick to the Ungerboeck model as we know that it is more general and contains receiver parameters that are not available in the Forney model. Due to Fact 6, we know that there is a BCJR for the Ungerboeck model, which implies that all our results are of operational meaning.
The Ungerboeck based CS receiver from "Optimal channel shortening for MIMO and ISI channels" presented in the previous section (although no equations were given) represents prior art of the CS art. It maximizes the transmission rate that can be used when a CS receiver is adopted.
However, the inventor has identified the following: in modern wireless communication systems, the receiver iterates between detection of the channel **H** and an outer error correcting code (ECC) decoder. Hence, in all iterations, except in the first step, of the channel detector, there is prior information about the data symbols **x.** Therefore, the inventor concludes that the prior information should somehow be taken into consideration when designing the CS detector and the parameters $\mathbf{H}_{opt}$ and $\mathbf{G}_{opt}$ should reflect the prior information. Prior information is characterized through a-priori LLRs of the input symbols **x.**
So, all prior art has neglected the fact that the CS parameters should be changed over the iterations, and that they should also be dependent on the quality of the LLRs of the channel inputs x provided by the outer ECC decoder. However, there exist no prior attempts to design capacity optimized CS detectors that take prior information into account through interference cancellation. This problem is challenging as there were no closed form expressions of the CS capacity that could be utilized until the paper "Optimal channel shortening for MIMO and ISI channels" was published. But from the aforementioned paper, capacity expressions became available which set the stage for the current innovation. However, the paper did not pursue CS detectors that utilized the prior LLRs of the channel inputs **x.** If the prior LLRs are set to null, the current innovation and the method presented in the paper "Optimal channel shortening for MIMO and ISI channels" coincide. The extension into the case presented here, namely, the prior LLRs are not null, is by no means trivial and cannot be deduced from the paper as no hints on how to deal with this is given.

Therefore, the present invention relates to a method for detection of communication symbols in communication signals transmitted in wireless communication systems. At least one communication signal **y** is transmitted over a radio channel **H,** and the received signal **y** comprises encoded radio channel symbol inputs **x.** Further, a priori Log Likelihood Ratios, LLRs, of the channel inputs **x** are also received.

The basic method according to the invention further comprises the steps of:

> a) computing soft symbol estimates $\mu$ and variance **D** of the channel inputs **x** based on LLRs of the channel inputs **x,** which e.g., may be ECC encoded ;
> b) filtering and interference cancelling the received signal **y** by using a first filter and filtered soft symbol estimates $\mu$ so as to obtain a filtered and interference cancelled received signal;
> c) estimating the MSE matrix **B** of the filtered and interference cancelled received signal;
> d) computing an optimal matrix $\mathbf{G}_{opt}$ for a BCJR algorithm based on the MSE estimate **B,** wherein the optimal matrix $\mathbf{G}_{opt}$ specifies the BCJR algorithm, the optimal matrix $\mathbf{G}_{opt}$ is calculated according to Theorem 2 in "Optimal channel shortening for MIMO and ISI channels";
> e) further filtering the filtered and interference cancelled received signal by using a second filter so as to obtain an input signal **r** to the BCJR algorithm, the second filter being equal to ($\mathbf{G}_{opt}$ + **I**).;
> f) feeding the input signal **r** into the BCJR algorithm so as to obtain extrinsic LLRs of the channel inputs **x.**

The output of the method, i.e., the extrinsic LLRs of the channel inputs **x,** can be used in many different applications. On the most fundamental level, the context surrounding the innovation is irrelevant. The method can be applied in any scenario where symbols **x** are observed through a noisy linear vector channel with memory and where some form of prior information of **x** is present. If those assumptions are fulfilled, the method will produce extrinsic LLRs. Hence, the present method and device can be used as a building block in any system that has a need for such method. The method can therefore find wide spread application areas, ranging from wireless communications to biology.

Moreover, according to an embodiment of the invention, the LLRs of the channel inputs **x** in step a) above is obtained from a decoder (e.g., an ECC decoder). The method further comprises the steps of:

> g) feeding the extrinsic LLRs into the decoder so as to obtain updated LLRs of the channel inputs **x**; and
> h) repeating steps a)-g) *i* number of times by using the updated LLRs in step a) to compute soft symbol estimates $\mu$ and variance **D.**

Thereby, an iterative CS BCJR decoder is provided which uses the information from the decoder to improve the symbol estimations for each iteration step. So, the outcome of the present invention is a CS decoder with computational complexity $O(|\Omega|^L)$ that can reach the rate,

$$C_{CS,It} = \sum_{n=1}^{N} I(x_n; \mathbf{y} \mid x_{n-1}, \ldots, x_{n-L}, \mu_m), m \in \left\{1, 2, \ldots, N\right\} / \left\{n - L, n - L + 1, \ldots, n\right\},$$

at this particular iteration. Hence, the mutual information based CS receiver has been extended into an iterative receiver that adapts its operations within each iteration step.

This is a very nice and intuitive result. The CS detector can reach exactly what one could hope for, namely that within the memory length, it can condition on the actually transmitted data symbol, but outside it condition on the estimated symbol from the decoder. Note that as the iterations proceeds, the quality of $\mu$ becomes better and better. Eventually, if the process converges, $\mu$ will become x. A comparison to the result of Fact 5 can now be done. These two rates have the same forms, but the rate in Fact 5 lacks the $\mu$ terms. Thus, the rate of the optimized iterative CS detector, stated above, is superior to the rate of the non-iterative detector.

In order to understand the rationale behind the present invention we must briefly go through the steps taken in the optimal Ungerboeck based CS detector for non-iterative receivers described in "Optimal channel shortening for MIMO and ISI channels". The optimal pre-filter $\mathbf{H}_{opt}$ is in the non-iterative case shown to be,

$$\mathbf{H}_{opt} = \left(\mathbf{G}_{opt} + \mathbf{I}\right)\mathbf{H}^*(\mathbf{H}\mathbf{H}^* + N_0\mathbf{I})^{-1} = \left(\mathbf{G}_{opt} + \mathbf{I}\right)\Upsilon, \Upsilon = \mathbf{H}^*(\mathbf{H}\mathbf{H}^* + N_0\mathbf{I})^{-1}.$$

This is nothing else than the normal Wiener filter $\Upsilon$ for data symbols **x** with *x* zero mean and unit variance, compensated by the term ($\mathbf{G}_{opt}$ +**I**). If the filter $\Upsilon$ is applied to *y,* then the MSE-matrix can be expressed as,

$$\mathbf{B} = E\left\{(\Upsilon\mathbf{y} - \mathbf{x})(\Upsilon\mathbf{y} - \mathbf{x})^*\right\} = \mathbf{I} - \mathbf{H}^*\left(\mathbf{H}\mathbf{H}^* + N_0\mathbf{I}\right)^{-1}\mathbf{H}.$$

From Theorem 2 in "Optimal channel shortening for MIMO and ISI channels", it follows that the optimal matrix $\mathbf{G}_{opt}$ is dependent solely on the MSE matrix **B**. In other words, $\mathbf{G}_{opt}$ is found (in closed form, see Theorem 2 in "Optimal channel shortening for MIMO and ISI channels") from the MSE-matrix of the Wiener filter applied to **y**. We denote this dependency as $\mathbf{G}_{opt} = \Psi(\mathbf{B})$, where the function $\Psi(\cdot)$ is defined in Theorem 2 of "Optimal channel shortening for MIMO and ISI channels". Then the matrix $\mathbf{H}_{opt}$ is simply $\mathbf{H}_{opt} = (\mathbf{G}_{opt} + \mathbf{I})\Upsilon$.

We are now ready to move over to the iterative case and present details of the invention, we will follow the same methodology as what is outlined just above, namely: find Wiener filter, find MSE matrix, find the optimal matrix $\mathbf{G}_{opt}$, compensate the Wiener filter with ($\mathbf{G}_{opt}$ +**I**), and apply the BCJR algorithm. The only difference is that we will take into consideration the prior information from an outer ECC decoder. It should be noted that the present method is not limited to a particular ECC or ECC decoder.

In the following an exemplary embodiment of an iterative method according to an embodiment of the invention is described:

1. The ECC decoder produces LLRs on every bit, and we assume that these LLRs are independent due to a perfect interleaver assumption. Suppose that symbol $x_k$ is carrying the $\log_2 (\Omega)$ bits $b_k^1, b_k^2, \ldots, b_k^{\log_2(\Omega)}$. We now have,

- $$\mu_k = E\{x_k\} = \sum_{b_k^1, b_k^2, \ldots, b_k^{\log_2(\Omega)}} \Pr(b_k^1, b_k^2, \ldots, b_k^{\log_2(\Omega)}) \, \mathrm{x}(b_k^1, b_k^2, \ldots, b_k^{\log_2(\Omega)}),$$

  ○ where $\Pr(b_k^1, b_k^2, \ldots, b_k^{\log_2(\Omega)})$ is the probability of a certain outcome of the bits $b_k^1, b_k^2, \ldots, b_k^{\log_2(\Omega)}$, this comes from the outer ECC decoder, and $\mathrm{x}(b_k^1, b_k^2, \ldots, b_k^{\log_2(\Omega)})$ is the symbol from the constellation formed from those bits. The variance of $x_k$, denoted by $d_k$, is now

  ○ $$d_k = E\left\{\left|x_k - \mu_k\right|^2\right\} = \sum_{b_k^1, b_k^2, \ldots, b_k^{\log_2(\Omega)}} \Pr(b_k^1, b_k^2, \ldots, b_k^{\log_2(\Omega)}) \left|\mathrm{x}(b_k^1, b_k^2, \ldots, b_k^{\log_2(\Omega)}) - \mu_k\right|^2.$$

  ○ The vector **μ** is formed by stacking all $\mu_k$ s on top of each other, and the matrix **D** is a diagonal matrix with $d_k$ as its *k*th diagonal element.

2. Define the index set $I_k = \{k\text{-}L, k\text{-}L\text{+}1, \ldots k\text{+}L\text{-}1, k\text{+}L\} \cap \{1, 2, \ldots, N\}$. For a given symbol position *k,* this is the set of indexes around *k* that is at most *L* symbols away (in any direction). We can now formulate a modified Wiener filter of symbol $x_k$ that is not utilizing any prior information from the ECC decoder about symbols in $I_k$. Such Wiener filtering reads $E(x_k \mid \mathbf{y}, \mu_{l \notin I_k}) = \mathbf{H}_k^* (\mathbf{H}\mathbf{D}_k\mathbf{H}^* + N_0\mathbf{I})(y - \breve{\mathbf{H}}_k\mu)$, where $\mathbf{H}_k$ is the *k*th column of **H**, $\breve{\mathbf{H}}_k$ are the columns of **H** with column indexes in $I_k$, and $\mathbf{D}_k$ is the matrix **D** but where the elements at positions in $I_k$ are equal to 1. In words, this modified Wiener filter is ignoring the prior information from the ECC decoder at $\pm L$ positions away from the symbol $x_k$. We can express the modified Wiener filtering over all the symbols in vector form as,

$$E(\mathbf{x} \mid \mathbf{y}, \boldsymbol{\mu}) = \begin{bmatrix} E(x_1 \mid \mathbf{y}, \boldsymbol{\mu}_{l \notin I_1}) \\ \vdots \\ E(x_N \mid \mathbf{y}, \boldsymbol{\mu}_{l \notin I_N}) \end{bmatrix} = \Upsilon \mathbf{y} - \mathbf{F} \boldsymbol{\mu}$$

where

$$\Upsilon = \begin{bmatrix} \gamma_1 \\ \vdots \\ \gamma_N \end{bmatrix}, \quad \gamma_k = \mathbf{H}_k^*(\mathbf{H}\mathbf{D}_k\mathbf{H}^* + N_0\mathbf{I}), \quad \mathbf{F}_{ij} = \begin{cases} \gamma_i \mathbf{H}_j, & |i-j| \leq v \\ 0, & |i-j| > v. \end{cases}$$

- We point out that the filtered and interference cancelled version of $\mathbf{y}$ is denoted as an expectation $E(\mathbf{x} \mid \mathbf{y}, \boldsymbol{\mu})$. This is so since the filtered version is actually the expected value of $\mathbf{x}$ given $\mathbf{y}$ and $\boldsymbol{\mu}$ (except that some symbols of $\mathbf{x}$ are not utilizing the values in $\boldsymbol{\mu}$).

3. The MSE of the filtered and interference cancelled signal $\mathbf{B}(\boldsymbol{\mu}) = E[(\mathbf{x} - E(\mathbf{x} \mid \mathbf{y}, \boldsymbol{\mu}))(\mathbf{x} - E(\mathbf{x} \mid \mathbf{y}, \boldsymbol{\mu}))^*]$ can be straightforwardly computed as,

$$\mathbf{B}(\boldsymbol{\mu}) = (\mathbf{I} - \Upsilon\mathbf{H})(\mathbf{I} - \Upsilon\mathbf{H})^* + N_0 \Upsilon\Upsilon^* + \mathbf{F}\left(\mathbf{I} - \sqrt{\mathbf{D}}\right)\left(\mathbf{I} - \sqrt{\mathbf{D}}\right)^* \mathbf{F}^*$$

$$+ (\mathbf{I} - \Upsilon\mathbf{H})\left(\mathbf{I} - \sqrt{\mathbf{D}}\right)^* \mathbf{F}^* + \mathbf{F}\left(\mathbf{I} - \sqrt{\mathbf{D}}\right)(\mathbf{I} - \Upsilon\mathbf{H})^*.$$

- From this expression we can clearly see the dependency on the MSEs from the prior information $\boldsymbol{\mu}$. Bu using $\boldsymbol{\mu} = \mathbf{0}$, we can see that the above equations in step 2-3 collapses down into the equations in the prior art described in the introduction of Section 2.2.2. Thus, using "$\boldsymbol{\mu} > \mathbf{0}$" is an important aspect.

4. Compute the optimal matrix $\mathbf{G}_{opt} = \Psi(\mathbf{B}(\boldsymbol{\mu}))$. This is done according to Theorem 2 in the paper "Optimal channel shortening for MIMO and ISI channels".
5. Construct a vector $\mathbf{r} = (\mathbf{G}_{opt} + \mathbf{I})E(\mathbf{x} \mid \mathbf{y}, \boldsymbol{\mu})$.
6. Feed the vector r from step 5 and the matrix $\mathbf{G}_{opt}$ from step 4 to an Ungerboeck BCJR; it should be noted that the noise density has been absorbed by the optimal matrix $\mathbf{G}_{opt}$ so the BCJR should work with a noise density equal to 1.

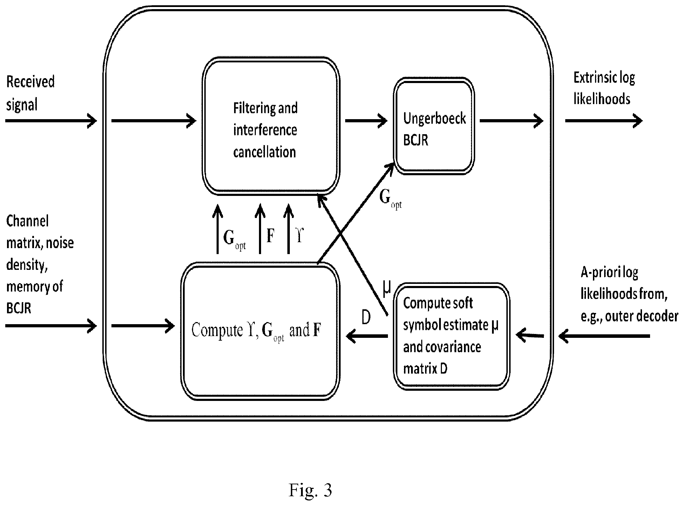

Fig. 3 illustrates a system model of an embodiment of the present invention. The figure illustrates the order among the operations needed to synthesize the present detection method: (i) based on the prior LLRs, the parameters $\boldsymbol{\mu}$ and $\mathbf{D}$ are computed. (ii) Based on $\boldsymbol{\mu}$, $\mathbf{D}$, the channel matrix $\mathbf{H}$, the noise density $N_0$, and the BCJR memory length $L$, the parameters $\Gamma$, $\mathbf{G}_{opt}$, and $\mathbf{F}$ are computed. (iii) The received signal $\mathbf{y}$ is thereafter filtered and interference cancelled based on $\boldsymbol{\mu}$, $\Gamma$, $\mathbf{G}_{opt}$, and $\mathbf{F}$, which produces $E(\mathbf{x} \mid \mathbf{y}, \boldsymbol{\mu})$.(iv) The BCJR, whose operations are fully specified through $\mathbf{G}_{opt}$, is finally applied to the signal $E(\mathbf{x} \mid \mathbf{y}, \boldsymbol{\mu})$.

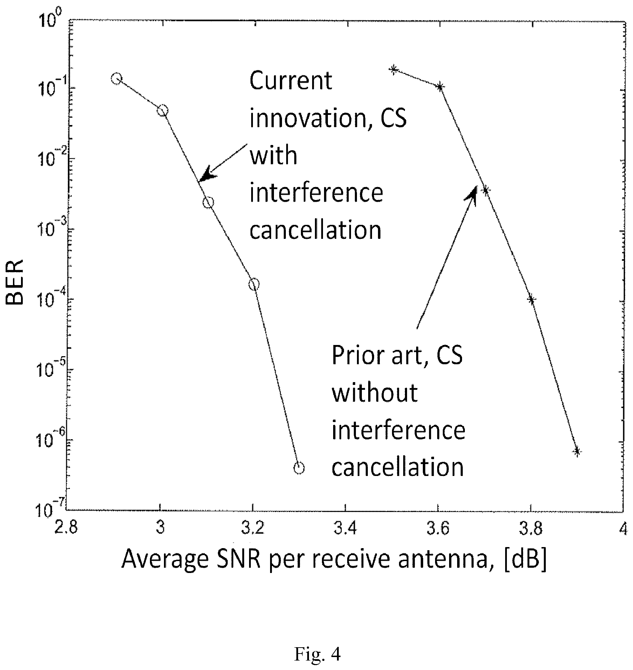

Simulation results of the present invention and prior art are shown in Fig. 4 for 6x6 MIMO systems with QPSK inputs. The outer ECC is an irregular (2050, 4100) LDPC code, and it follows that the 4100 code symbols are transmitted over 342 channel matrices $\mathbf{H}$. All channel matrices within each code block are assumed independent and comprise independent complex Gaussian random variables. We consider a memory 1 channel shortening receiver, so we set $L=1$. This implies that there are 4 states in the BCJR, which should be compared with a complexity of 4096 for the full complexity BCJR. In Fig. 4, the left curve is the performance result of a proposed receiver according to the invention, while the right curve is the CS prior art receiver. From the curves a clear improvement can be seen with a method according to the present invention.

Moreover, as understood by the person skilled in the art, any method according to the present invention may also be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Furthermore, the present method can be implemented and executed in suitable detection devices, and it is realized by the skilled person that the present detection device may comprise the necessary communication capabilities in the form of e.g., functions, means, units, elements, etc., for executing the methods according to the invention which means that the devices can be modified, *mutatis mutandis,* according to any method of the present invention. Examples of other such means, units, elements and functions are: memory, encoders, decoders, mapping units, multipliers, interleavers, deinterleavers, modulators, demodulators, inputs, outputs, antennas, amplifiers, DSPs, etc. which are suitably arranged together for correct operation.

Especially, the processors of the present detection device may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

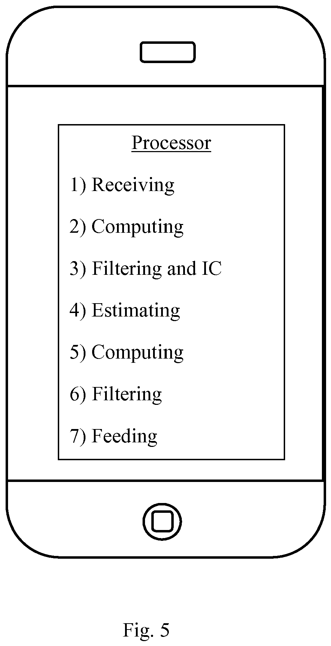

The present detection device comprises a processor which is arranged to execute, *mutatis mutandis,* the corresponding method steps. Fig. 5 shows an example of a detector device according to the invention. As shown, the processor executes the different steps according to the invention. The detector device can e.g. be a receiver device or be a part of such a receiver device arranged for communication in a wireless communication system. However, the detection device can also be a standalone detection device coupled to a receiver device, communication processing device or any other suitable communication device receiving communication signals.

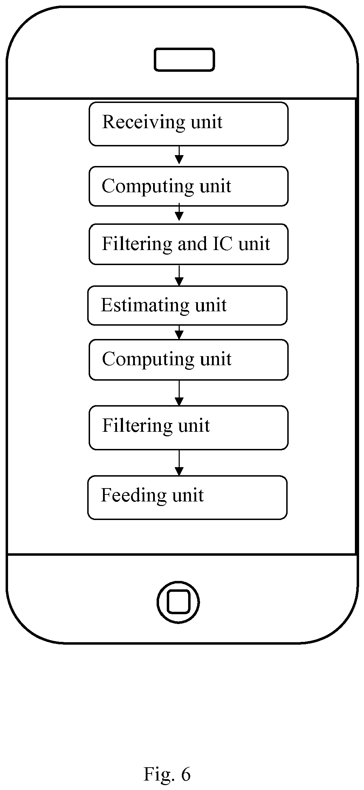

Alternatively, according to another embodiment of the invention the present receiver device comprises a receiver unit, a computing unit, a filtering and interference cancellation unit, an estimating unit, a computing unit, a filtering unit, and a feeding unit all arranged to execute the corresponding method steps. Fig. 6 shows an example of a receiver device according to the alternative embodiment of the invention. As shown, each functional unit executes its associated step of the invention are inter-coupled accordingly.

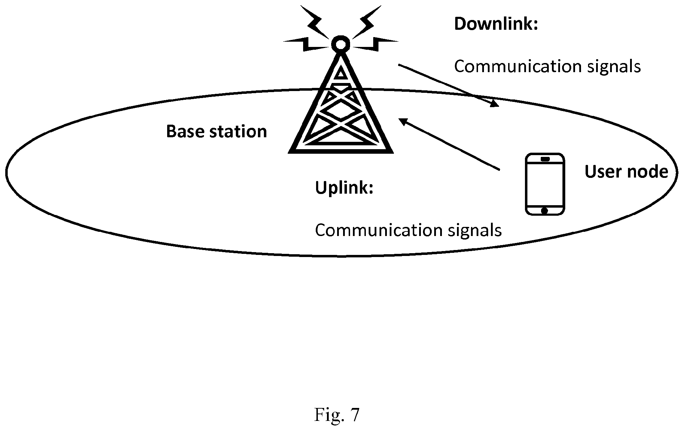

The method and corresponding detector device can be used in any suitable wireless communication system. Example of such system is cellular systems such as LTE and LTE-A in which communication is performed in the uplink and the downlink between base stations and user nodes (UEs). Fig. 7 illustrates a system overview of a cellular system with uplink and downlink transmission of communication signals.

Finally, it should be understood that the present invention is not limited to the embodiments described above, but also relates to and incorporates all embodiments within the scope of the appended independent claims.

**Claims**

1. Method for detection of symbols carried in received communication signals, the method comprising:

   receiving at least one communication signal **y** transmitted over a radio channel **H,** wherein said received signal **y** comprises encoded radio channel symbol inputs **x,** and
   receiving a priori Log Likelihood Ratios, LLRs, of said channel inputs **x;** and the method further comprises:

   a) computing soft symbol estimates $\mu$ and variance **D** of said channel inputs **x** based on LLRs of said channel inputs **x;**
   b) filtering and interference cancelling said received signal **y** by using a first filter and filtered soft symbol estimates $\mu$ so as to obtain a filtered and interference cancelled received signal;
   c) estimating the Mean Square Error, MSE, matrix **B** of said filtered and interference cancelled received signal;
   d) computing an optimal matrix $\mathbf{G}_{opt}$ for a BCJR algorithm based on said MSE estimate **B,** wherein said optimal matrix $\mathbf{G}_{opt}$ specifies the BCJR algorithm;
   e) further filtering said filtered and interference cancelled received signal by using a second filter so as to obtain an input signal **r** to the BCJR algorithm, the second filter being derived from said optimal matrix $\boldsymbol{G}_{opt}$; and
   f) feeding said input signal **r** into the BCJR algorithm so as to obtain extrinsic LLRs of said channel inputs **x,** wherein the LLRs of said channel **inputs x** in step a) is obtained from a decoder, and the method further comprises:
   g) feeding said extrinsic LLRs into the decoder so as to obtain updated LLRs of said channel inputs **x**; and
   h) repeating steps a)-g) *i* number of times by using said updated LLRs in step a) to compute soft symbol estimates $\mu$ and variance **D.**

**2.** Method according to claim 1, wherein the first filter is a modified Wiener filter for said radio channel inputs **x** having **mean** $\mu$ and variance **D**.

**3.** Method according to claim 1, wherein the $k$th element of said filtered and interference cancelled received signal has the form $r_k = E(x_k | \mathbf{y}, \mu_l)$, $l \notin I_k$ where $E$ is the expectation operator and $I_k$ is a set of indices that depends on $k$ in a pre-determined fashion, and wherein the vector comprising $r_k$, $\forall k$, is denoted as $E(\mathbf{x} | \mathbf{y}, \mu)$.

**4.** Method according to claim 3, wherein said set of indices $I_k$ is $I_k = \{k\text{-}L, k\text{-}L\text{+}1,...k\text{+}L\text{-}1, k\text{+}L\} \cap \{1,2,...,N\}$, where $N$ is the total number of elements in said channel inputs $x$ and $L$ is the memory of the BCJR algorithm.

**5.** Method according to claim 4, wherein said optimal matrix $\mathbf{G}_{opt}$ is solely dependent on said MSE estimate **B** and the memory $L$.

**6.** Method according to claim 4 or 5, wherein the memory $L$ can be arbitrarily chosen.

**7.** Method according to claims 3 wherein said MSE estimate **B** has the form $\mathbf{B}(\mu) = E[(\mathbf{x} - E(\mathbf{x} | \mathbf{y}, \mu))\,(\mathbf{x} - E(\mathbf{x} | \mathbf{y}, \mu))^*]$, where "*" is the Hermitian transpose operator.

**8.** Method according to any of the preceding claims, wherein the second filter has the form $(\mathbf{G}_{opt} + \mathbf{I})$, where **I** is the identity matrix.

**9.** Method according to claim 3 and 8, wherein said input signal **r** to said BCJR algorithm is obtained as: $\mathbf{r} = (\mathbf{G}_{opt} + \mathbf{I})E(\mathbf{x}|\mathbf{y}, \mu)$.

**10.** Method according to any of the preceding claims, wherein said radio channel **H** is a linear radio channel.

**11.** Method according to any of the preceding claims, wherein the communication signal is transmitted in a cellular wireless communication system, such as 3GPP communication systems.

**12.** Computer program, wherein code means when run by processing means causes said processing means to execute said method according to any of claims 1-11.

**13.** Computer program product comprising a computer readable medium and a computer program according to claim 12, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

**14.** Detection device arranged for detection of symbols carried in received communication signals, the receiver comprising a processor arranged to:

receive at least one communication signal **y** transmitted over a radio channel **H,** wherein said received signal $y$ comprises encoded radio channel symbol inputs **x,** and
receive a priori Log Likelihood Ratios, LLRs, of said channel inputs **x;** wherein the processor is further arranged to:

a) compute soft symbol estimates $\mu$ and variance **D** of said channel inputs **x** based on LLRs of said channel inputs **x;**
b) filter and interference cancel said received signal **y** by using a first filter and filtered soft symbol estimates $\mu$ so as to obtain a filtered and interference cancelled received signal;
c) estimate the Mean Square Error, MSE, matrix **B** of said filtered and interference cancelled received signal;
d) compute an optimal matrix $\mathbf{G}_{opt}$ for a BCJR algorithm based on said MSE estimate B, wherein said optimal matrix $\mathbf{G}_{opt}$ specifies the BCJR algorithm;
e) further filter said filtered and interference cancelled received signal by using a second filter so as to obtain an input signal **r** to the BCJR algorithm, the second filter being derived from said optimal matrix $\mathbf{G}_{opt}$; and
f) feed said input signal **r** into the BCJR algorithm so as to obtain extrinsic LLRs of said channel inputs $x$, wherein the LLRs of said channel inputs **x** in step a) is obtained from a decoder, and the processor is further arranged to:
g) feed said extrinsic LLRs into the decoder so as to obtain updated LLRs of said channel inputs **x;** and
h) repeat steps a)-g) $i$ number of times by using said updated LLRs in step a) to compute soft symbol

estimates $\boldsymbol{\mu}$ and variance $\mathbf{D}$.

**Patentansprüche**

1.  Verfahren zur Detektion von Symbolen, die in empfangenen Kommunikationssignalen geführt werden, wobei das Verfahren Folgendes umfasst:

    Empfangen wenigstens eines Kommunikationssignals $\mathbf{y}$, das über einen Funkkanal $\mathbf{H}$ gesendet wird, wobei das empfangene Signal $\mathbf{y}$ codierte Funkkanalsymboleingaben $\mathbf{x}$ umfasst, und
    Empfangen von a priori Log-Wahrscheinlichkeitsverhältnissen, LLRs, der Kanaleingaben $\mathbf{x}$; und wobei das Verfahren ferner Folgendes umfasst:

    a) Berechnen von Softsymbolschätzungen $\boldsymbol{\mu}$ und der Varianz $\mathbf{D}$ der Kanaleingaben $\mathbf{x}$ basierend auf den LLRs der Kanaleingaben $\mathbf{x}$;
    b) Filtern und Störungsunterdrücken des empfangenen Signals $\mathbf{y}$ durch Verwenden eines ersten Filters und gefilterter Softsymbolschätzungen $\boldsymbol{\mu}$, um ein gefiltertes und störungsunterdrücktes empfangenes Signal zu erhalten;
    c) Schätzen der Matrix des mittleren quadratischen Fehlers, MSE-Matrix, $\mathbf{B}$ des gefilterten und störungsunterdrückten empfangenen Signals;
    d) Berechnen einer optimalen Matrix $\mathbf{G_{opt}}$ für einen BCJR-Algorithmus basierend auf der MSE-Schätzung $\mathbf{B}$, wobei die optimale Matrix $\mathbf{G_{opt}}$ den BCJR-Algorithmus spezifiziert;
    e) ferner Filtern des gefilterten und störungsunterdrückten empfangenen Signals durch Verwenden eines zweiten Filters, um ein Eingangssignal $r$ für den BCJR-Algorithmus zu erhalten, wobei das zweite Filter aus der optimalen Matrix $\mathbf{G_{opt}}$ abgeleitet ist; und
    f) Eingeben des Eingangssignals $\mathbf{r}$ in den BCJR-Algorithmus, um extrinsische LLRs der Kanaleingaben $\mathbf{x}$ zu erhalten, wobei die LLRs der Kanaleingaben $\mathbf{x}$ in Schritt a) aus einem Decodierer erhalten werden, und wobei das Verfahren ferner Folgendes umfasst:
    g) Eingeben der extrinsischen LLRs in den Decodierer, um aktualisierte LLRs der Kanaleingaben $\mathbf{x}$ zu erhalten; und
    h) i- maliges Wiederholen der Schritte a) bis g) durch Verwenden der aktualisierten LLRs in Schritt a), um die Softsymbolschätzungen $\boldsymbol{\mu}$ und die Varianz $\mathbf{D}$ zu berechnen.

2.  Verfahren nach Anspruch 1, wobei das erste Filter ein modifiziertes Wiener-Filter für die Funkkanaleingaben x ist, die den Mittelwert $\boldsymbol{\mu}$ und die Varianz $\mathbf{D}$ aufweisen.

3.  Verfahren nach Anspruch 1, wobei das $k$-te Element des gefilterten und störungsunterdrückten empfangenen Signals die Form $r_k = E(x_k \mid y,u),\ l \notin I_k$ aufweist, wobei $E$ der Erwartungswertoperator ist und $I_k$ eine Gruppe von Indizes ist, die von $k$ auf eine vorbestimmte Weise abhängt, und wobei der Vektor, der $r_k \forall k$ umfasst, als $E(\mathbf{x}|\mathbf{y},\boldsymbol{\mu})$ bezeichnet ist.

4.  Verfahren nach Anspruch 3, wobei die Gruppe von Indizes $I_k$ gleich $I_k = I_k = \{k - L,\ k - L +1,\ ...\ k + L -1,\ k + L\} \cap \{1, 2,..., N\}$ ist, wobei $N$ die Gesamtzahl von Elementen in den Kanaleingaben x ist und L der Speicher des BCJR-Algorithmus ist.

5.  Verfahren nach Anspruch 4, wobei die optimale Matrix $\mathbf{G_{opt}}$ nur von der MSE-Schätzung $\mathbf{B}$ und dem Speicher $L$ abhängig ist.

6.  Verfahren nach Anspruch 4 oder 5, wobei der Speicher $L$ beliebig gewählt werden kann.

7.  Verfahren nach Anspruch 3, wobei die MSE-Schätzung $\mathbf{B}$ die Form $\mathbf{B}(\boldsymbol{\mu}) = E[(\mathbf{x}-E(\mathbf{x}|\mathbf{y},\boldsymbol{\mu}))(x-E(\mathbf{x}|\mathbf{y},\boldsymbol{\mu}))^*]$ aufweist, wobei "*" der hermitesche Vertauschungsoperator ist.

8.  Verfahren nach einem der vorhergehenden Ansprüche, wobei das zweite Filter die Form $(\mathbf{G_{opt}} + \mathbf{I})$ aufweist, wobei $\mathbf{I}$ die Einheitsmatrix ist.

9.  Verfahren nach Anspruch 3 und 8, wobei das Eingangssignal $\mathbf{r}$ für den BCJR-Algorithmus erhalten wird als: $r = (\mathbf{G_{opt}} + \mathbf{I})E(\mathbf{x}|\mathbf{y},\boldsymbol{\mu})$.

10. Verfahren nach einem der vorhergehenden Ansprüche, wobei der Funkkanal **H ein** linearer Funkkanal ist.

11. Verfahren nach einem der vorhergehenden Ansprüche, wobei das Kommunikationssignal in einem zellulären drahtlosen Kommunikationssystem, wie z. B. 3GPP-Kommunikationssystemen, gesendet wird.

12. Computerprogramm, wobei Codemittel, wenn sie durch Verarbeitungsmittel zum Ablaufen gebracht werden, bewirken, dass die Verarbeitungsmittel das Verfahren nach einem der Ansprüche 1 bis 11 ausführen.

13. Computerprogrammprodukt, das ein computerlesbares Medium und ein Computerprogramm nach Anspruch 12 umfasst, wobei das Computerprogramm in dem computerlesbaren Medium enthalten ist, und das eines oder mehrere aus der folgenden Gruppe umfasst: ROM (Festwertspeicher), PROM (programmierbarer ROM), EPROM (löschbarer PROM), Flash-Speicher, EEPROM (elektrischer EPROM) und Festplattenlaufwerk.

14. Detektionsvorrichtung zur Detektion von Symbolen, die in empfangenen Kommunikationssignalen geführt sind, wobei der Empfänger einen Prozessor umfasst, der ausgelegt ist:

wenigstens ein Kommunikationssignal **y,** das über einen Funkkanal **H** gesendet wird, zu empfangen, wobei das empfangene Signal **y** codierte Funkkanalsymboleingaben **x** umfasst, und
a priori Log-Wahrscheinlichkeitsverhältnisse, LLRs, der Kanaleingaben **x** zu empfangen; wobei der Prozessor ferner ausgelegt ist:

a) Softsymbolschätzungen $\mu$ und die Varianz **D** der Kanaleingaben **x** basierend auf den LLRs der Kanaleingaben **x** zu berechnen;
b) das empfangene Signal **y** durch Verwenden eines ersten Filters und gefilterter Softsymbolschätzungen $\mu$ zu filtern und störungszuunterdrücken, um ein gefiltertes und störungsunterdrücktes empfangenes Signal zu erhalten;
c) die Matrix des mittleren quadratischen Fehlers, MSE-Matrix, **B** des gefilterten und störungsunterdrückten empfangenen Signals zu schätzen;
d) eine optimale Matrix $\mathbf{G}_{opt}$ für einen BCJR-Algorithmus basierend auf der MSE-Schätzung **B** zu berechnen, wobei die optimale Matrix $\mathbf{G}_{opt}$ den BCJR-Algorithmus spezifiziert;
e) ferner das gefilterte und störungsunterdrückte empfangene Signal durch Verwenden eines zweiten Filters zu filtern, um ein Eingangssignal **r** für den BCJR-Algorithmus zu erhalten, wobei das zweite Filter aus der optimalen Matrix $\mathbf{G}_{opt}$ abgeleitet ist; und
f) das Eingangssignal **r** in den BCJR-Algorithmus einzugeben, um extrinsische LLRs der Kanaleingaben **x** zu erhalten, wobei die LLRs der Kanaleingaben **x** in Schritt a) aus einem Decodierer erhalten werden, und wobei der Prozessor ferner ausgelegt ist:
g) die extrinsischen LLRs in den Decodierer einzugeben, um aktualisierte LLRs der Kanaleingaben **x** zu erhalten; und
h) die Schritte a) bis g) durch Verwenden der aktualisierten LLRs in Schritt a) i-mal zu wiederholen, um die Softsymbolschätzungen $\mu$ und die Varianz **D** zu berechnen.

**Revendications**

1. Procédé de détection de symboles acheminés dans des signaux de communication reçus, le procédé comprenant les étapes consistant à :

recevoir au moins un signal de communication **y** transmis sur un canal radio **H,** dans lequel ledit signal reçu **y** comprend des entrées de symboles de canaux radio codées **x,** et
recevoir des rapports de probabilités logarithmiques, LLR, a priori desdites entrées de canaux **x** ; et le procédé comprend en outre les étapes consistant à :

a) calculer des estimations de symboles souples $\mu$ et une variance **D** desdites entrées de canaux **x** sur la base des LLR desdites entrées de canaux **x** ;
b) filtrer et annuler une interférence dudit signal reçu **y** à l'aide d'un premier filtre et d'estimations de symboles souples filtrées $\mu$ de façon à obtenir un signal reçu d'interférence filtrée et annulée ;
c) estimer la matrice **B** d'erreur quadratique moyenne, MSE, dudit signal reçu d'interférence filtrée et annulée ;

d) calculer une matrice optimale $\mathbf{G_{opt}}$ pour un algorithme BCJR sur la base de ladite estimation **B** MSE, dans lequel ladite matrice optimale $\mathbf{G_{opt}}$ spécifie l'algorithme BCJR;

e) filtrer en outre ledit signal reçu d'interférence filtrée et annulée à l'aide d'un second filtre de façon à obtenir un signal d'entrée **r** à l'algorithme BCJR, le second filtre étant déduit de ladite matrice optimale $\mathbf{G_{opt}}$ ; et

f) alimenter ledit signal d'entrée **r** dans l'algorithme BCJR de façon à obtenir des LLR extrinsèques desdites entrées de canaux **x,** dans lequel les LLR desdites entrées de canaux **x** dans l'étape a) sont obtenus à partir d'un décodeur, et le procédé comprend en outre les étapes consistant à :

g) alimenter lesdits LLR extrinsèques dans le décodeur de façon à obtenir des LLR mis à jour desdites entrées de canaux **x** ; et

h) répéter les étapes a) à g) un nombre de fois **i** à l'aide desdits LLR mis à jour dans l'étape a) pour calculer des estimations de symboles souples **μ** et une variance **D.**

2.  Procédé selon la revendication 1, dans lequel le premier filtre est un filtre de Wiener modifié pour lesdites entrées de canaux radio x ayant une moyenne **μ** et une variance **D.**

3.  Procédé selon la revendication 1, dans lequel le $k^{\text{ème}}$ élément dudit signal reçu d'interférence filtrée et annulée a la forme $r_k = E(x_k|\mathbf{y}, \mu_I)$, $I \notin I_k$ où E est l'opérateur de prévision et $I_k$ est un ensemble d'indices qui dépend de k d'une façon prédéterminée, et dans lequel le vecteur comprenant $r_k$, $\forall k$, est indiqué par $E(\mathbf{x}|\mathbf{y}, \mathbf{μ})$.

4.  Procédé selon la revendication 3, dans lequel ledit ensemble d'indices $I_k$ est $I_k = I_k = \{k-L, k-L+1,...k+L-1, k+L\} \cap \{1,2,...,N\}$, où N est le nombre total d'éléments dans lesdites entrées de canaux **x,** et L est la mémoire de l'algorithme BCJR.

5.  Procédé selon la revendication 4, dans lequel ladite matrice optimale $\mathbf{G_{opt}}$ est seulement dépendante de ladite estimation **B** MSE et de la mémoire L.

6.  Procédé selon la revendication 4 ou 5, dans lequel la mémoire L peut être choisie arbitrairement.

7.  Procédé selon la revendication 3, dans lequel ladite estimation **B** MSE a la forme $\mathbf{B}(\mathbf{μ}) = E[(\mathbf{x}-E(\mathbf{x}|\mathbf{y},\mathbf{μ})) (\mathbf{x}-E(\mathbf{x}|\mathbf{y},\mathbf{μ}))^*]$, où « * » est l'opérateur de transposition hermitienne.

8.  Procédé selon l'une quelconque des revendications précédentes, dans lequel le second filtre a la forme $(\mathbf{G_{opt}} + \mathbf{I})$, où **I** est la matrice d'identité.

9.  Procédé selon la revendication 3 et 8, dans lequel ledit signal d'entrée **r** audit algorithme BCJR est obtenu par : $\mathbf{r} = (\mathbf{G_{opt}} + \mathbf{I}) E(\mathbf{x}|\mathbf{y},\mathbf{μ})$.

10. Procédé selon l'une quelconque des revendications précédentes, dans lequel ledit canal radio **H** est un canal radio linéaire.

11. Procédé selon l'une quelconque des revendications précédentes, dans lequel le signal de communication est transmis dans un système de communication sans fil cellulaire, tel que des systèmes de communication 3GPP.

12. Programme informatique, dans lequel un moyen de codage, lorsqu'il est exécuté par des moyens de traitement, amène lesdits moyens de traitement à exécuter ledit procédé selon l'une quelconque des revendications 1 à 11.

13. Produit de programme informatique comprenant un support lisible par ordinateur et un programme informatique selon la revendication 12, dans lequel ledit programme informatique est compris dans le support lisible par ordinateur, et comprend un ou plusieurs éléments du groupe : ROM (mémoire morte), PROM (ROM programmable), EPROM (PROM effaçable), mémoire flash, EEPROM (EPROM de manière électrique) et lecteur de disque dur.

14. Dispositif de détection conçu pour une détection de symboles acheminés dans des signaux de communication reçus, le récepteur comprenant un processeur conçu pour :

recevoir au moins un signal de communication **y** transmis sur un canal radio **H,** dans lequel ledit signal reçu **y** comprend des entrées de symboles de canaux radio codées **x,** et
recevoir des rapports de probabilités logarithmiques, LLR, a priori desdites entrées de canaux **x** ; dans lequel le processeur est agencé en outre pour :

a) calculer des estimations de symboles souples $\mu$ et une variance **D** desdites entrées de canaux **x** sur la base des LLR desdites entrées de canaux **x** ;

b) filtrer et annuler une interférence dudit signal reçu **y** à l'aide d'un premier filtre et d'estimations de symboles souples filtrées $\mu$ de façon à obtenir un signal reçu d'interférence filtrée et annulée ;

c) estimer la matrice **B** d'erreur quadratique moyenne, MSE, dudit signal reçu d'interférence filtrée et annulée ;

d) calculer une matrice optimale **G**$_{opt}$ pour un algorithme BCJR sur la base de ladite estimation **B** MSE, dans lequel ladite matrice optimale **G**$_{opt}$ spécifie l'algorithme BCJR;

e) filtrer en outre ledit signal reçu d'interférence filtrée et annulée à l'aide d'un second filtre de façon à obtenir un signal d'entrée **r** à l'algorithme BCJR, le second filtre étant déduit de ladite matrice optimale **G**$_{opt}$ ; et

f) alimenter ledit signal d'entrée **r** dans l'algorithme BCJR de façon à obtenir des LLR extrinsèques desdites entrées de canaux **x,** dans lequel les LLR desdites entrées de canaux **x** dans l'étape a) sont obtenus à partir d'un décodeur, et le processeur est agencé en outre pour :

g) alimenter lesdits LLR extrinsèques dans le décodeur de façon à obtenir des LLR mis à jour desdites entrées de canaux **x** ; et

h) répéter les étapes a) à g) un nombre de fois **i** à l'aide desdits LLR mis à jour dans l'étape a) pour calculer des estimations de symboles souples $\mu$ et une variance **D.**

Fig. 1

Fig. 2

Fig. 3

Fig. 4

Processor

1) Receiving

2) Computing

3) Filtering and IC

4) Estimating

5) Computing

6) Filtering

7) Feeding

Fig. 5

Fig. 6

Fig. 7

**REFERENCES CITED IN THE DESCRIPTION**

**Non-patent literature cited in the description**

- **F. RUSEK ; A. PRLJA.** Optimal channel shortening for MIMO and ISI channels. *IEEE Transactions on Wireless Communications,* February 2012

- On MAP symbol detection for ISI channels using the ungerboeck observation model. **COLAVOLPE, G. ; BARBIERI, A.** Communications Letters. IEEE, August 2005, vol. 9, 720-722